# EUROPÄISCHE PATENTSCHRIFT

(11) **EP 3 204 925 B1**
(45) Veröffentlichungstag und Bekanntmachung des Hinweises auf die Patenterteilung: **05.03.2025**
(21) Anmeldenummer: 15781327.0
(22) Anmeldetag: 08.10.2015
(51) Int. Cl.: G08G 1/0962, G08G 1/0967

(54) **VERFAHREN ZUM HANDHABEN EINER REGELKARTE**
METHOD FOR HANDLING A RULE CHART
PROCÉDÉ POUR UTILISER UNE CARTE DE RÈGLES DE CIRCULATION

(30) Priorität: 10.10.2014 DE 102014220624
(43) Veröffentlichungstag der Anmeldung: 16.08.2017
(73) Patentinhaber: Continental Automotive Technologies GmbH, 30175 Hannover (DE)
(72) Erfinder: ZYDEK, Bastian, 65812 Bad Soden (DE); GROTENDORST, Thomas, 65760 Eschborn (DE); KELLING, Enno, 65760 Eschborn (DE); LÜKE, Stefan, 61191 Rosbach vor der Höhe (DE); MENZEL, Marc, 35096 Weimar (Lahn) (DE)
(74) Vertreter: Continental Corporation
(86) Internationale Anmeldenummer: PCT/EP2015/073241
(87) Internationale Veröffentlichungsnummer: WO 2016/055561

(56) Entgegenhaltungen:
- EP-A2- 1 569 183
- DE-A1- 102005 050 277
- DE-A1- 102010 030 867
- DE-A1- 102012 021 282
- DE-A1- 102014 003 550
- JP-A- 2008 232 391
- US-A1- 2014 278 029
- M. CAMPBELL ET AL: "Autonomous driving in urban environments: approaches, lessons and challenges", PHILOSOPHICAL TRANSACTIONS OF THE ROYAL SOCIETY A: MATHEMATICAL, PHYSICAL AND ENGINEERING SCIENCES, vol. 5469, no. 1928, 13 October 2010 (2010-10-13), pages 4649 - 4672, XP055235487, ISSN: 1939-3539, DOI: 10.1098/rsta.2010.0110

## Beschreibung

Die Erfindung betrifft ein Verfahren zum Handhaben einer Verkehrsregeln enthaltenden Regelkarte in einem Fahrzeug.

Verkehrsregeln werden heutzutage im Regelfall durch allgemein gültige Regeln wie rechts-vor-links, durch Verkehrsschilder, durch Lichtzeichen oder durch Verkehrspolizisten festgelegt. Individuell lenkbare Fahrzeuge wie Kraftfahrzeuge oder Fahrräder, Schienenfahrzeuge wie Straßenbahnen und auch Fußgänger vermeiden durch Beachtung dieser Regeln mögliche Kollisionen und Unfälle. Dies gilt beispielsweise für Vorfahrtsregeln, jedoch auch für andere Verkehrsregeln wie beispielsweise Überholverbote.

Bei heutigen Fahrzeugen und anderen Verkehrsteilnehmern werden Verkehrsregeln üblicherweise vom Fahrer oder Fußgänger von Verkehrsschildern, Lichtzeichen oder Verkehrspolizisten abgelesen oder anhand einer bestimmten Verkehrslage ermittelt. So kann ein Fahrer beispielsweise anhand fehlender Verkehrszeichen an einer Kreuzung erkennen, dass dort die Grundregel rechts-vor-links gilt. Entsprechend kann er anhand anderer an der Kreuzung befindlicher Fahrzeuge ableiten, ob er Vorfahrt hat oder nicht, also die Vorfahrt gewähren muss. Sieht der Fahrer einen Verkehrspolizisten, kann er ebenfalls ablesen ob er weiterfahren darf oder nicht. Nähert sich ein Fahrzeug einer Einmündung, beispielsweise einer Auffahrt auf eine Autobahn oder eine andere Fernverkehrsstraße, so kann der Fahrer je nach in dem Land geltenden Gesetzen ermitteln, ob ein einscherendes Fahrzeug grundsätzlich auf eine Lücke im fließenden Verkehr warten muss, oder ob dem einfahrenden Fahrzeug Vorrang zu gewähren ist.

Die manuelle Erfassung von Verkehrsregeln ist immer mit dem Risiko menschlichen Versagens verbunden. Aus einer falschen Erfassung oder auch vorsätzlichen Missachtung von Verkehrsregeln resultiert ein sehr hohes Unfallrisiko. Deshalb wurden bereits Systeme entwickelt, welche beispielsweise mittels einer Kamera Verkehrsregeln erfassen und den Fahrer bei der Beachtung der Verkehrsregeln unterstützen können. Allerdings können diese Systeme einen Unfall insbesondere dann nicht verhindern, wenn bei zumindest einem Fahrzeug, welches an einer zu regelnden Situation beteiligt ist, zumindest eine Verkehrsregel falsch erfasst wird. Dies kann beispielsweise aufgrund technischer Fehler oder auch aufgrund schwierigen Erkennungssituationen wie einem schneebedeckten Verkehrsschild erfolgen.

Das Dokument US 2014/0278029 A1 offenbart Verfahren und Software zum Verwalten der Prioritäten von Fahrzeugen, welche sich einer Konfliktzone nähern. Dabei kann ein ad-hoc-Netzwerk zum Entwickeln eines lokalen Verkehrsleitplans aufgebaut werden.

Das Dokument JP 2008/232391 A offenbart ein automatisches Schaltungssteuerungssystem, wobei Bewegungsdaten ausgewertet werden, um die Schaltungssteuerung in Bezug auf Parameter wie Straßenbedingungen oder Umgebung zu optimieren.

Es ist deshalb eine Aufgabe der Erfindung, ein alternatives, beispielsweise verbessertes Verfahren zur Handhabung von Verkehrsregeln bereitzustellen. Dies wird erfindungsgemäß durch ein Verfahren nach Anspruch 1 erreicht. Vorteilhafte Ausgestaltungen können beispielsweise den abhängigen Ansprüchen entnommen werden. Der Inhalt der Ansprüche wird durch ausdrückliche Inbezugnahme zum Inhalt der Beschreibung gemacht.

Die Erfindung betrifft ein Verfahren zum Handhaben einer Verkehrsregeln enthaltenden Regelkarte in einem Fahrzeug, welches folgenden Schritt aufweist:
- Empfangen einer Regelkarte direkt von einem anderen Fahrzeug.

Mittels des erfindungsgemäßen Verfahrens kann eine Verkehrsregel beziehungsweise Regelkarte von einem anderen Fahrzeug empfangen werden. Dies erlaubt einen Abgleich der Verkehrsregeln mehrerer Fahrzeuge. Es kann dabei beispielsweise der Fall verhindert werden, dass zwei sich kreuzende Fahrzeuge an einer Kreuzung dem jeweiligen Fahrer anzeigen, er habe Vorfahrt, da die Fahrzeuge bei Verwendung des erfindungsgemäßen Verfahrens miteinander kommunizieren und etwaige Unstimmigkeiten in den erkannten Verkehrsregeln, welche zu einer erhöhten Unfallgefahr führen können, erkennen können. Dies stellt jedoch nur einen möglichen Anwendungsbereich des erfindungsgemäßen Verfahrens dar, zahlreiche weitere Anwendungen sind möglich, beispielsweise diejenigen, welche weiter unten beschrieben werden.

Die Verwendung einer Regelkarte ist insbesondere vorteilhaft, weil sich eine solche Karte nicht darauf beschränkt die Verkehrsregeln für das eigene Fahrzeug zu umfassen, sondern auch die für andere Verkehrsteilnehmer, insbesondere Fahrzeuge, geltenden Verkehrsregeln beinhalten kann. Mit einer solchen Karte werden auf einer technischen Ebene die Rahmenbedingungen geschaffen, die nicht nur die für einen selbst geltenden Verkehrsregeln berücksichtigen, sondern auch solche, die für andere Verkehrsteilnehmer gelten.

Beispielsweise kann die empfangene Regelkarte unmittelbar im Fahrzeug verwendet werden oder sie kann auch mit einer im Fahrzeug selbst erstellten oder anderweitig erhaltenen Regelkarte abgeglichen werden. Beispielsweise kann dies in einer Art und Weise erfolgen, wie dies weiter unten beschrieben werden wird.

Unter Verkehrsregeln können insbesondere Vorfahrt beziehungsweise Vorfahrt gewähren sowie ein Überholverbot verstanden werden. Auch andere Verkehrsregeln können jedoch mittels des erfindungsgemäßen Verfahrens verarbeitet werden, beispielsweise Geschwindigkeitsbegrenzungen oder Halteverbote.

Unter einer Regelkarte wird insbesondere eine Zusammenstellung von Verkehrsregeln verstanden, welche beispielsweise einer zu regelnden Situation und/oder einem zu regelnden Straßenabschnitt oder einem Gebiet zugeordnet sind. Insbesondere kann eine Regelkarte Verkehrsregeln enthalten, welche zueinander korrespondieren, beispielsweise Vorfahrtsregeln für jede Straße und jede Fahrtrichtung von mehreren Straßen, welche sich an einer Kreuzung kreuzen, oder Vorfahrtsregeln für eine Autobahn und eine Einfädelspur der Autobahn. Idealerweise sollten die Verkehrsregeln derart zueinander korrespondieren, dass bei Beachtung der Verkehrsregeln eine Kollision der beteiligten Fahrzeuge vermieden wird. Beispielsweise kann dies bedeuten, dass bei einer Kreuzung beide Richtungen einer durchgehenden Straße Vorfahrt erhalten, während beide Richtungen einer kreuzenden Straße Vorfahrt gewähren erhalten. Bei einer Einmündung kann dies bedeuten, dass dem durchfahrenden Verkehr oder dem einmündenden Verkehr Vorfahrt gewährt wird. Bei einer Straße mit Überholmöglichkeit kann dies bedeuten, dass bei Gegenverkehrt ein temporäres Überholverbot erzeugt wird, beispielsweise ein Überholverbot hinsichtlich des Überholens eines langsam fahrenden Fahrzeugs wie eines Lastkraftwagens oder eines landwirtschaftlichen Fahrzeugs.

Eine Regelkarte kann beispielsweise dazu verwendet werden, dem Fahrer die darin enthaltenen Verkehrsregeln auf der Instrumententafel oder in einem Head-up-Display anzuzeigen. Sie kann jedoch beispielsweise auch im Rahmen eines Systems zum autonomen Fahren verwendet werden oder für ein Assistenzsystem.

Gemäß einer Ausführung ist vorgesehen, dass
- das Verfahren ansprechend darauf ausgeführt wird, dass eine Annäherung an eine Kreuzung oder Einmündung erkannt wird,
- wobei die Annäherung bevorzugt mittels Umfeldsensoren, insbesondere mittels einer Kamera, mittels Satellitennavigation, mittels einer elektronischen Straßenkarte und/oder mittels Fahrzeug-zu-X-Kommunikation erkannt wird.

Dies ermöglicht eine Durchführung des Verfahrens in einer solchen Situation, welche besonders regelungsbedürftig ist. Dies kann insbesondere auch der Fall sein, wenn eine Annäherung mehrerer Fahrzeuge stattfindet und/oder erkannt wird. Unter einer Einmündung kann insbesondere auch eine Auffahrt auf eine Autobahn verstanden werden. Unter einer Kreuzung kann auch ein Kreisverkehr oder eine andere Verzweigung oder Zusammenführung von Straßen verstanden werden.

Bevorzugt ist dabei vorgesehen, dass in der Regelkarte enthaltene Verkehrsregeln der Kreuzung oder Einmündung zugeordnet sind, insbesondere Vorfahrt und Vorfahrt gewähren.

Gemäß einer Ausführung ist vorgesehen, dass das Verfahren ansprechend darauf ausgeführt wird, dass das Fahrzeug an ein anderes Fahrzeug eine Nachricht gesendet hat, welches eine Aufforderung zum Senden einer Regelkarte enthält.

Dies ermöglicht es beispielsweise, dass das Fahrzeug, welches das Verfahren ausführt, in dem Fall, dass es auch ein langsam fahrendes Fahrzeug folgt, vor einem beabsichtigten Überholvorgang bei dem langsam fahrenden Fahrzeug nachfrägt, ob ein Überholvorgang möglich ist. Wenn bei dem langsam fahrenden Fahrzeug kein Gegenverkehr erkannt wird, kann eine Regelkarte erzeugt werden, welche kein Überholverbot enthält. Wenn Gegenverkehr erkannt wird, kann eine Regelkarte erzeugt werden, welche ein temporäres Überholverbot enthält. Diese Regelkarte wird dann von dem langsam fahrenden Fahrzeug an das nachfolgende Fahrzeug gesendet und zeigt diesem an, ob ein Überholvorgang möglich ist oder besser unterlassen werden soll.

Das nachfolgende Fahrzeug kann die Aufforderung zum Senden einer Regelkarte insbesondere ansprechend auf ein Angebot zur Mitwirkung bei einem Überholvorgang senden, wobei in diesem Angebot das langsam fahrende Fahrzeug nachfolgenden Fahrzeugen mitteilen kann, dass es zur Mitwirkung bei der Planung eines Überholvorgangs in der Lage ist. Ein solches Angebot kann beispielsweise von dem Fahrzeug empfangen werden, welches das erfindungsgemäße Verfahren ausführt.

Durch derartige Ausführungen kann die Sicherheit beispielsweise auf Landstraßen erheblich erhöht werden, da ein langsam fahrendes Fahrzeug wie beispielsweise ein Lastkraftwagen typischerweise über ein besseres Blickfeld und bessere Sensoren verfügt als die nachfolgenden Fahrzeuge.

Gemäß einer Ausführung ist vorgesehen, dass das Verfahren laufend wiederholt, insbesondere periodisch wiederholt zum kontinuierlichen Abgleich, ausgeführt wird.

Damit können beispielsweise beteiligte Fahrzeuge, insbesondere mittels direkter oder indirekter Funkverbindung kommunizierende Fahrzeuge oder Fahrzeuge, welche an einer regelungsbedürftigen Situation beteiligt sind, laufend ihre Regelkarten austauschen, insbesondere um etwaige Probleme, beispielsweise nicht korrespondierende oder nicht übereinstimmende Regelkarten, so früh wie möglich zu erkennen und Unfällen vorzubeugen. Das Verfahren kann auch derart ausgeführt werden, dass ein Fahrzeug seine jeweilige Regelkarte laufend sendet, unabhängig davon ob sie von einem anderen Fahrzeug oder einer anderen Einheit empfangen wird.

Gemäß einer Ausführung ist vorgesehen, dass zusammen mit der Regelkarte eines oder mehrere der folgenden Elemente empfangen werden:
- ein Kennzeichen eines die Regelkarte sendenden Fahrzeugs,
- eine Identifikation eines die Regelkarte sendenden Fahrzeugs,
- eine Kreuzungstopologie,
- Objekteigenschaften, insbesondere Art, Position und/oder Trajektorie, eines die Regelkarte sendenden Fahrzeugs,
- Informationen über eine Zuverlässigkeit der Regelkarte und/oder über eine Zuverlässigkeit von Umfeldsensoren, insbesondere einer Kamera,
- Informationen über Fahrzeuge, welche nicht mit einer Technik zum Teilnehmen am Abstimmen von Verkehrsregeln ausgestattet sind, insbesondere welche nicht mit einer Fahrzeug-zu-X-Kommunikationstechnik ausgestattet sind, und insbesondere einschließlich deren Kennzeichen,
- ein Zuverlässigkeitsmaß.

Derartige Informationen können die Auswertung der Regelkarte bei dem empfangenden Fahrzeug verbessern und/oder erleichtern. Ein Zuverlässigkeitsmaß kann sich beispielsweise auf die Qualität von Sensoren des sendenden Fahrzeugs beziehen und somit anzeigend dafür sein, wie zuverlässig die Regelkarte ist, beispielsweise ob damit zu rechnen ist, dass Verkehrszeichen oder Kreuzungstopologien tatsächlich richtig erkannt wurden.

Erfindungsgemäß ist vorgesehen, dass das Verfahren ferner folgende Schritte aufweist:
- Vergleichen der empfangenen Regelkarte mit einer weiteren Regelkarte, und
- Auslösen eines Abstimmungsvorgangs, wenn die Regelkarte und die weitere Regelkarte nicht übereinstimmen.

Damit kann für den Fall, dass Regelkarten nicht übereinstimmen, ein Abstimmungsvorgang ausgelöst werden, welcher beispielsweise zu übereinstimmenden und das Unfallrisiko weiter senkenden Regelkarten führen kann. Unter nicht übereinstimmenden Regelkarten werden insbesondere Regelkarten verstanden, welche für zumindest ein tatsächlich vorhandenes oder auch nur für ein möglicherweise vorhandenes Fahrzeug zumindest zwei unterschiedliche Verkehrsregeln anzeigen. Beispielsweise können zwei nicht übereinstimmende Regelkarten derart aufgebaut sein, dass eine Regelkarte für eine bestimmte Straße an einer Kreuzung in einer bestimmten Richtung Vorfahrt anzeigt, wohingegen die andere Regelkarte Vorfahrt gewähren anzeigt. Übereinstimmende Regelkarten zeigen typischerweise für alle möglichen Fahrzeugstandorte die jeweils gleichen Verkehrsregeln an.

Wenn die Regelkarten übereinstimmen, wird typischerweise kein Abstimmungsvorgang ausgelöst. In diesem Fall kann beispielsweise eine Mitteilung an eine externe Einheit wie andere Fahrzeuge oder einen zentralen Server gesendet werden, wobei die Mitteilung anzeigt, dass die Regelkarten übereinstimmen. Dies zeigt an, dass die Kreuzung basierend auf den übereinstimmenden Regelkarten ohne Gefahr von allen beteiligten Fahrzeugen passiert werden kann.

Gemäß einer Ausführung ist vorgesehen, dass die weitere Regelkarte mittels folgender Schritte erzeugt wird:
- Erkennen eines Umgebungszustands mittels einer Anzahl von Umfeldsensoren,
- Ableiten einer Anzahl von Verkehrsregeln basierend auf dem Umgebungszustand, und
- Erzeugen der Regelkarte basierend zumindest auf den Verkehrsregeln.

Dies ermöglicht einen Abgleich der von einem anderen Fahrzeug empfangenen Regelkarte mit einer vom Fahrzeug selbst erzeugten Regelkarte.

Unter einem Umgebungszustand kann beispielsweise eine Kreuzung, eine Anzahl von Verkehrsschildern, eine Anzahl von Lichtzeichen, eine Anzahl weiterer Fahrzeuge oder anderer Verkehrsteilnehmer, eine Einmündung und/oder eine Straße verstanden werden. Es kann darunter auch eine bestimmte Situation verstanden werden, welche regelungsbedürftig erscheint, beispielsweise wenn ein langsam fahrendes Fahrzeug Gegenverkehr erkennt, welcher einem Überholvorgang nachfolgender Fahrzeuge entgegensteht.

Bei den Umfeldsensoren kann es sich beispielsweise um eine Anzahl von Kameras handeln. Es kann sich jedoch auch um andere Umfeldsensoren, beispielsweise um Ultraschallsensoren, Radargeräte, Fahrzeug-zu-X-Kommunikationsmittel oder um Mobilfunkkommunikationsmittel handeln. Mittels einer Kamera können beispielsweise Kreuzungstopologien, Verkehrszeichen, Einmündungen oder entgegenkommende Fahrzeuge erkannt werden. Verkehrsregeln können beispielsweise anhand von erkannten Verkehrszeichen oder Kreuzungstopologien erkannt werden. Aus einem erkannten Verkehrszeichen, beispielsweise Vorfahrt, Vorfahrt gewähren oder STOP, kann typischerweise unmittelbar die entsprechende Verkehrsregel abgeleitet werden. Aus einer erkannten Kreuzungstopologie ohne erkannte Verkehrszeichen kann als Grundregel rechts-vor-links abgeleitet werden, wobei anhand anderer erkannter Fahrzeuge eine Verkehrsregel für das eigene Fahrzeug abgeleitet werden kann. Aus einer erkannten Einmündung oder Auffahrt kann unter Berücksichtigung lokaler Gesetze und Regelungen eine Vorfahrtsregel abgeleitet werden. Aus erkannten entgegenkommenden Fahrzeugen kann ein Überholverbot für nachfolgende Fahrzeuge abgeleitet werden.

Die Regelkarte wird typischerweise dadurch erzeugt, dass zunächst die unmittelbar abgeleiteten Regeln, beispielsweise aufgrund eines erkannten Vorfahrtsschilds, in die Regelkarte geschrieben werden und anschließend dazu zwingend korrespondierende Verkehrsregeln in die Regelkarte geschrieben werden. Beispielsweise kann zu einer Vorfahrt des eigenen Fahrzeugs ein Vorfahrt gewähren des Querverkehrs korrespondieren, da ansonsten ein Unfall drohen würde. Zu einer Vorfahrt eines auf einer Autobahn durchfahrenden Fahrzeugs kann ein Vorfahrt gewähren eines einmündenden Fahrzeugs korrespondieren.

Durch das Vergleichen von Regelkarten kann insbesondere eine Überprüfung durchgeführt werden, ob die Regelkarte zu anderen Regelkarten korrespondiert beziehungsweise zusammen mit anderen Regelkarten ein stimmiges Bild ergibt. Darunter wird insbesondere verstanden, dass die Regelkarten Verkehrsregeln enthalten, welche ein möglichst geringes Unfallrisiko ergeben.

Insbesondere wird ein Abgleich zwischen Regelkarten ermöglicht, welche von unterschiedlichen Fahrzeugen beispielsweise mittels jeweiliger Umfeldsensoren erzeugt wurden.

Gemäß einer Ausführung ist vorgesehen, dass die weitere Regelkarte von einem zentralen Server empfangen wird. Dies ermöglicht die Verwendung eines globalen Back-Ends, wobei der zentrale Server die Fahrzeuge bei der Verwaltung und beim Austausch der Regelkarten unterstützt.

Gemäß einer Ausführung ist vorgesehen, dass an dem Abstimmungsvorgang das Fahrzeug sowie andere Fahrzeuge beteiligt sind, welche sich einer Kreuzung oder Einmündung annähern oder welche auf der gleichen Straße fahren. Gemäß einer weiteren, damit auch kombinierbaren Ausführung ist vorgesehen, dass an dem Abstimmungsvorgang ausschließlich Fahrzeuge beteiligt sind, von welchen eine Kreuzung jeweiliger Trajektorien berechnet wurde.

Dies entspricht typischen Gruppen von Fahrzeugen, zwischen welchen ein Abgleich von Verkehrsregeln beziehungsweise diese Verkehrsregeln enthaltenden Regelkarten vorteilhaft ist.

Im Rahmen einer Plausibilisierung können Regelkarten ausgewertet und/oder verändert werden, so dass eine Regelkarte entsteht, welche dann alle beteiligten Fahrzeuge verwenden können beziehungsweise welche für alle Fahrzeuge gilt. Wenn identische Informationen mehrerer Fahrzeuge vorliegen, so haben diese Informationen typischerweise eine höhere Konfidenz, so dass sie für die Erstellung einer gemeinsamen Regelkarte in besonderer Weise Berücksichtigung finden können. Gleiches kann für signifikantere und/oder zuverlässigere Informationen gelten.

Unter komplementären Informationen werden insbesondere Informationen verstanden, welche unverändert in eine einzige Regelkarte übernommen werden können, ohne dass sich dadurch eine Kollisionsgefahr von Fahrzeugen, welche diese Regelkarte befolgen, erhöht. Beispielsweise kann es sich bei Vorfahrt für eine Straße und Vorfahrt gewähren für eine Querstraße und komplementäre Verkehrsregeln und damit um komplementäre Informationen handeln.

Gemäß einer Ausführung ist vorgesehen, dass bei Durchführung des Abstimmungsvorgangs einer oder mehrere der folgenden Schritte iterativ ausgeführt werden:
- Bewerten einer Signifikanz und/oder Konfidenz von Informationen mit Schwellenwerten oder Wahrscheinlichkeiten, beispielsweise von Gefahrsituation oder Fahrmodus wie selbstfahrend oder automatisch fahrend eines jeweiligen Fahrzeugs,
- Plausibilisieren, beispielsweise technisch oder statistisch,
- Zusammentragen von Informationen, insbesondere aller verfügbarer Informationen,
- Fusionieren, insbesondere Erstellen eines neuen, beispielsweise erweiterten, insbesondere räumlich erweiterten und/oder präzisierten Bilds, das insbesondere inhaltlich stimmig ist.

Unter einem Bild kann beispielsweise eine Regelkarte verstanden werden. Es kann darunter auch eine anders repräsentierte Beurteilung einer Verkehrslage oder einer Straßentopologie verstanden werden. Inhaltlich stimmig ist ein Bild insbesondere dann, wenn jeweilige Verkehrsregeln zueinander korrespondieren, so dass sich die Kollisionswahrscheinlichkeit bei Beachtung der Verkehrsregeln beziehungsweise einer daraus erzeugten Regelkarte nicht erhöht und/oder minimal ist.

Es sei verstanden, dass der Abstimmungsvorgang sowohl bei dem Fahrzeug ausgeführt werden kann, welches den Abstimmungsvorgang ausgelöst hat, insbesondere wie weiter oben erläutert, oder auch bei jedem anderen beteiligten Fahrzeug. Das Verfahren ist somit, insbesondere in diesem Fall, nicht auf die Ausführung in einem Fahrzeug eingeschränkt. Es kann sich hier also beispielsweise auch um ein Verfahren handeln, welches über mehrere Fahrzeuge verteilt ausgeführt wird.

Gemäß einer Ausführung ist vorgesehen, dass aus dem Abstimmungsvorgang eine Regelkarte resultiert, welche an eine Anzahl anderer Fahrzeuge gesendet wird.

Dies ermöglicht insbesondere die Erstellung einer Regelkarte, welche dann von allen Fahrzeugen zu beachten ist.

Gemäß einer Ausführung ist vorgesehen, dass das Verfahren bei Durchführung des Abstimmungsvorgangs ferner einen Schritt des Erkennens einer Blockade aufweist.

Unter einer Blockade wird dabei insbesondere eine Situation verstanden, bei welcher mehrere Fahrzeuge derart aufeinander zu fahren oder derart angeordnet sind, dass eine eindeutige Vorfahrtsregelung nicht möglich ist. Dies kann beispielsweise der Fall sein, wenn vier Fahrzeuge aus unterschiedlichen Richtungen auf eine Kreuzung zu fahren, an welcher lediglich rechts-vor-links gilt, und gleichzeitig an der Kreuzung eintreffen.

Gemäß einer Ausführung ist vorgesehen, dass im Fall einer Blockade eine Regelkarte erstellt und/oder abgestimmt wird,
- welche einen möglichst gut fließenden Verkehr ermöglicht,
- bei welchem Fahrzeuge ohne Möglichkeit zur Teilnahme an dem Verfahren, insbesondere Fahrzeuge ohne Fahrzeug-zu-X-Kommunikationstechnik, priorisiert durchgelassen werden, und/oder
- bei welcher, insbesondere im Fall einer Pattsituation, Prioritäten anhand einem oder mehreren der folgenden Parameter Fahrzeugen zugewiesen werden:
   - Fahrgeschwindigkeit,
   - festes Regelwerk,
   - Fahrtrichtung, beispielsweise Himmelsrichtung,
   - Zählerstand jeweiliger Vorfahrtszähler,
   - Navigationsinformationen,
   - Informationen über aktivierte Komponenten wie ein Navigationssystem,
   - Informationen über gesetzte Blinker,
   - Informationen über automatische Lenkung,
   - Informationen über Nachgeben,
   - Fahrtziel,
   - geplante Trajektorie,
   - Sondereinsatzrechte oder Vorliegen besonderer Vorrechtsmerkmale;
   oder
- wobei im Fall einer Blockade der Abstimmungsvorgang abgebrochen wird.

Unter einer Pattsituation wird dabei insbesondere eine Situation verstanden, in welcher keines der Fahrzeuge a priori bevorrechtigt ist. Unter einem Nachgeben wird insbesondere verstanden, dass ein Fahrzeug von sich aus auf eine eventuell mögliche Vorfahrt verzichtet, wobei dieses Nachgeben bevorzugt den anderen beteiligten Fahrzeugen mitgeteilt wird.

Gemäß einer Ausführung ist vorgesehen, dass das Verfahren im Fall einer Blockade oder Pattsituation einen Schritt des Erkennens ausführt, ob ein Nachgeben angebracht ist, und wobei im Falle des Nachgebens eine Nachricht über das Nachgeben an andere beteiligte Fahrzeuge gesendet wird.

Damit kann die Regelungskomplexität deutlich gesenkt werden, da ein Fahrzeug, welches nachgibt, zumindest zu einer eindeutigen und unmittelbar eintragbaren Verkehrsregel Vorfahrt gewähren führt.

Gemäß einer Ausführung ist vorgesehen, dass bei Durchführung des Abstimmungsvorgangs folgende Schritte ausgeführt werden:
- Bestimmen eines der am Abstimmungsvorgang beteiligten Fahrzeuge oder einer Road-Side-Unit als Mastereinheit,
- Festlegen einer Regelkarte für alle am Abstimmungsvorgang beteiligten Fahrzeuge durch die Mastereinheit, und
- Senden der Regelkarte an alle beteiligten Fahrzeuge.

Im Gegensatz zu den weiter oben beschriebenen Ansätzen, welche zumindest in gewissen Ausführungen auch als kooperative Ansätze bezeichnet werden können, wird bei diesem Ansatz eine Mastereinheit bestimmt, welche die Erstellung einer für alle Fahrzeuge gültigen Regelkarte übernimmt. Damit kann auf mehrfache Iterationen zwischen den Fahrzeugen verzichtet werden. Vielmehr kann der Vorgang des Erstellens einer Regelkarte auf ein Fahrzeug konzentriert werden, welches dann die Regelkarte den anderen Fahrzeugen sendet.

Gemäß einer Ausführung ist vorgesehen, dass das Verfahren ferner einen Schritt des Sendens einer Bestätigung an die Mastereinheit und/oder an andere am Abstimmungsvorgang beteiligte Fahrzeuge nach Empfang einer Regelkarte von der Mastereinheit aufweist.

Damit kann insbesondere überprüft und/oder verifiziert werden, dass alle beteiligten Fahrzeuge die Regelkarte erhalten haben. Einer kritischen Situation, welche daraus entstehen kann, dass beispielsweise ein Fahrzeug die Regelkarte nicht korrekt empfangen hat, kann auf diese Weise vorgebeugt werden.

Gemäß einer Ausführung ist vorgesehen, dass die Mastereinheit unter am Abstimmungsvorgang beteiligten Fahrzeugen bestimmt wird, und zwar vorzugsweise unter Verwendung einer oder mehrerer der folgenden Kriterien:
- Zeitpunkte des Eintreffens an einem Ort mit zu regelnder Verkehrslage,
- Qualität von jeweiligen Sensoren,
- Zuverlässigkeit einer Fahrerfahrung,
- Anzahl von Bestimmungen als Mastereinheit in der Vergangenheit,
- Sondereinsatzrechte oder Vorliegen von besonderen Vorrechtsmerkmalen;
   und/oder
- wobei eine straßenseitig angeordnete Einheit, insbesondere eine Road Side Unit (RSU) als Mastereinheit bestimmt wird.

Mit diesen Kriterien kann eine angepasste und situationsangemessene Auswahl der Mastereinheit erfolgen. Für Kriterien wie Qualität oder Fahrerfahrung können geeignete Indikatoren vorgesehen sein. Für Kriterien wie die Anzahl von Bestimmungen als Mastereinheit in der Vergangenheit können beispielsweise Zähler vorgesehen sein. Sondereinsatzrechte können tatsächlich in Anspruch genommene besondere Rechte sein, beispielsweise eine Geschwindigkeitsübertretung bei einer Einsatzfahrt eines Krankenwagens oder Feuerwehrfahrzeugs. Vorrechtsmerkmale können unabhängig von deren tatsächlicher Inanspruchnahme vorhanden sein, beispielsweise wenn sich ein Krankenwagen gerade nicht auf einer Einsatzfahrt befindet und sich an die Verkehrsregeln hält.

Eine Road Side Unit kann insbesondere eine elektronische Einrichtung sein, welche in der Nähe einer Straße angeordnet ist und dazu ausgebildet ist, mit Fahrzeugen zu kommunizieren. Eine solche Road Side Unit kann insbesondere die hier relevante Funktionalität als Mastereinheit zur Verfügung stellen.

Gemäß einer Ausführung ist vorgesehen, dass Fahrzeuge, welche nicht Mastereinheit sind, einen oder mehrere der folgenden Schritte ausführen:
- Senden von Verkehrsregeln und/oder zumindest einer Regelkarte an die Mastereinheit,
- Empfangen einer Regelkarte von der Mastereinheit,
- sowie vorzugsweise auch Senden einer Bestätigung über die Einhaltung der von der Mastereinheit empfangenen Regelkarte.

Damit können geeignete Informationen an die Mastereinheit gesendet oder von dieser empfangen werden.

Gemäß einer Ausführung ist vorgesehen, dass die Mastereinheit einen oder mehrere der folgenden Schritte ausführt:
- Empfangen von Verkehrsregeln und/oder Regelkarten von Fahrzeugen,
- Zusammentragen und/oder Fusionieren der Verkehrsregeln oder Regelkarten,
- Erkennen und/oder Auflösen von Blockadesituationen und/oder nicht eindeutigen Regelsituationen, insbesondere durch Anpassung oder Modifizierung einer Regelkarte beziehungsweise einer fusionierten Regelkarte,
- Senden einer daraus entstandenen, insbesondere fusionierten Regelkarte, an andere am Abstimmungsvorgang beteiligte Fahrzeuge,
- Senden des Fahrverhaltens des Fahrzeugs, welches Mastereinheit ist.

Damit führt die Mastereinheit Schritte aus, welche der Erzeugung der gemeinsamen Regelkarte und/oder der besseren Verarbeitbarkeit einer Regelkarte in einem Fahrzeug dienen.

Gemäß einer Ausführung ist vorgesehen, dass bei Durchführung des Abstimmungsvorgangs eine zufällige Zuteilung von Prioritäten zu den beteiligten Fahrzeugen erfolgt, wobei ein Fahrzeug mit höherer Priorität Vorrecht vor Fahrzeugen mit niedrigerer Priorität hat.

Dies ermöglicht bei Fehlen von anderen Anhaltspunkten für Prioritäten eine pragmatische, einfache und im Mittel gerechte Zuteilung der Prioritäten zu den einzelnen Fahrzeugen. Vorrechte beziehungsweise Prioritäten sollen dabei vorzugsweise korrespondieren, was insbesondere bedeuten kann, dass die jeweiligen Vorrechte oder Prioritäten beziehungsweise daraus abgeleitete Verkehrsregeln zu einem möglichst geringen Unfallrisiko führen.

Gemäß einer Ausführung ist vorgesehen, dass das Verfahren in dem Fall, dass während des Abstimmungsvorgangs ein Abbruchkriterium erfüllt wird, einen Schritt des Abbrechens des Abstimmungsvorgangs aufweist.

Dies ermöglicht eine Reaktion auf eine besonders schwierige Situation, wobei beispielsweise ein zu langer und möglicherweise ergebnisloser Abstimmungsvorgang vermieden werden kann. Insbesondere kann beispielsweise vermieden werden, dass der Abstimmungsvorgang zu viel Zeit in Anspruch nimmt, um noch für eine sichere Regelung der Verkehrssituation vor Eintreffen der Fahrzeuge an der kritischen Stelle zu sorgen. Bei einem Abbrechen der Abstimmungsvorgangs können beispielsweise Fahrmanöver abgebrochen werden, es kann eine Übergabe an die jeweiligen Fahrer stattfinden, oder es können andere geeignete, insbesondere eine Kollision vermeidende Maßnahmen ergriffen werden.

Erfindungsgemäß ist vorgesehen, dass die Regelkarte oder die weitere Regelkarte über eine Funkverbindung, insbesondere in einer Fahrzeug-zu-X-Nachricht, empfangen wird. Grundsätzlich können auch Bestätigungen über eine Funkverbindung, insbesondere in einer Fahrzeug-zu-X-Nachricht, gesendet oder übertragen werden.

Dies ermöglicht insbesondere einen direkten Austausch von Regelkarten oder Bestätigungen zwischen den beteiligten Fahrzeugen ohne Zwischenschaltung eines Mobilfunknetzes.

Gemäß einer Ausführung ist vorgesehen, dass das Verfahren ferner einen Schritt des Sendens von Informationen, insbesondere über Regelkarten und/oder Verkehrsregeln, an nachfolgende oder andere Verkehrsteilnehmer aufweist, wobei dieser Schritt des Sendens laufend wiederholt oder ansprechend auf eine vergangene geregelte Situation ausgeführt wird.

Damit können andere, insbesondere nachfolgende Verkehrsteilnehmer über die geregelte Situation informiert werden. Dies ermöglicht diesen beispielsweise, bei vergleichbaren Situationen die jeweilige Regelkarte zu übernehmen.

Gemäß einer Ausführung ist vorgesehen, dass die Regelkarte und/oder die weitere Regelkarte
- einer Kreuzung,
- einem Kreisverkehr
- einer Einmündung, insbesondere auf eine Autobahn,
- einer Engstelle,
- einer Haltestelle
   und/oder
- einer Straße, insbesondere einer Straße mit Überholmöglichkeit,
zugeordnet ist.

An derartigen Stellen treten häufig regelungsbedürftige Situationen auf, welche sich vorteilhaft mit dem erfindungsgemäßen Verfahren regeln lassen.

Es sei verstanden, dass sich die Erfindung auch auf eine Vorrichtung zur Durchführung des erfindungsgemäßen Verfahrens bezieht. Eine solche Vorrichtung kann beispielsweise eine elektronische Steuerungseinrichtung sein, welche Prozessormittel und Speichermittel aufweist, wobei in den Speichermitteln Programmcode gespeichert ist, bei dessen Ausführung das erfindungsgemäße Verfahren ausgeführt wird. Eine solche Steuerungseinrichtung kann beispielsweise auch in eine andere Einrichtung integriert sein, beispielsweise in eine Steuerungseinrichtung für automatisiertes Fahren oder für Fahrassistenzsysteme. Die Erfindung betrifft des Weiteren ein nichtflüchtiges computerlesbares Speichermedium, auf welchem Programmcode enthalten ist, bei dessen Ausführung durch einen Prozessor ein erfindungsgemäßes Verfahren ausgeführt wird. Es sei verstanden, dass dabei grundsätzlich auf alle beschriebenen Ausführungen und Varianten des erfindungsgemäßen Verfahrens zurückgegriffen werden kann.

Außerdem betrifft die Erfindung ein System aus einer Anzahl von Fahrzeugen, wobei jedes Fahrzeug dazu ausgebildet ist, ein erfindungsgemäßes Verfahren auszuführen, und wobei die Fahrzeuge dazu ausgebildet sind, miteinander zu kommunizieren, insbesondere zur Durchführung des erfindungsgemäßen Verfahrens und insbesondere unter Verwendung von Fahrzeug-zu-X-Kommunikation. Hinsichtlich des erfindungsgemäßen Verfahrens kann dabei auf alle beschriebenen Ausführungen und Varianten zurückgegriffen werden.

Weitere Merkmale und Vorteile der Erfindung wird der Fachmann den nachfolgend mit Bezug auf die beigefügte Zeichnung beschriebenen Ausführungsbeispielen entnehmen. Dabei zeigen:
Fig. 1: Eine zu regelnde Situation an einer Kreuzung,
Fig. 2: Eine zu regelnde Situation auf einer Straße.

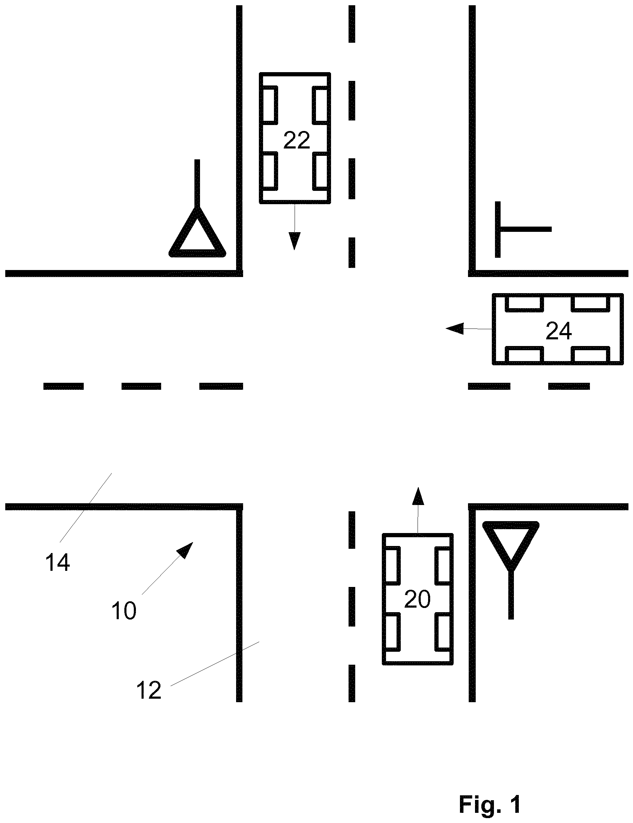

Fig. 1 zeigt eine Kreuzung 10, an welcher sich eine erste Straße 12 und eine zweite Straße 14 im rechten Winkel kreuzen. Auf der ersten Straße 12 fährt ein erstes Fahrzeug 20 auf die Kreuzung 10 zu. Diesem kommt auf der anderen Seite der Kreuzung 10 ein zweites Fahrzeug 22 entgegen, wobei dieses ebenfalls auf die Kreuzung 10 zu fährt. Auf der zweiten Straße 14 fährt quer hierzu ein drittes Fahrzeug 24, welches sich ebenfalls der Kreuzung 10 nähert. Die Fahrzeuge 20, 22, 24 sind jeweils lediglich schematisch dargestellt. Jeweilige Pfeile geben die Fahrtrichtungen an.

In der Situation, welche in Fig. 1 dargestellt ist, würde eine ungeregelte Weiterfahrt aller Fahrzeuge 20, 22, 24 zu einer Kollision führen. Aus diesem Grund gibt es Vorfahrtsregeln, welche die Priorität der Fahrzeuge 20, 22, 24 festlegen. Diese sind vorliegend mittels Verkehrszeichen angegeben, wobei das erste Fahrzeug 20 und das zweite Fahrzeug 22 jeweils ein Schild vor sich haben, welches Vorfahrt gewähren anzeigt, wohingegen das dritte Fahrzeug 24 ein Vorfahrtsschild vor sich hat. Aus dieser Regelung folgt grundsätzlich, dass das erste Fahrzeug 20 und das zweite Fahrzeug 22 zunächst warten müssen, bis das dritte Fahrzeug 24 vorbeigefahren ist. Anschließend können das erste Fahrzeug 20 und das zweite Fahrzeug 22 unmittelbar weiterfahren, da sich ihre jeweiligen Fahrtstrecken nicht kreuzen.

Vorliegend wird davon ausgegangen, dass das erste Fahrzeug 20 als erstes die zu regelnde Verkehrssituation erkennt, da es mittels Satellitennavigation und elektronischer Straßenkarte feststellt, dass es auf eine Kreuzung zu fährt und überdies mittels einer Kamera erkennt, dass sich auch andere Fahrzeuge der Kreuzung nähern. Mittels der Kamera erfasst das erste Fahrzeug 20 auch das Verkehrsschild "Vorfahrt gewähren", woraus das erste Fahrzeug 20 ableitet, dass es nicht bevorrechtigt ist.

Daraus leitet das erste Fahrzeug dann eine Regelkarte ab, welche der Kreuzung 10 zugehörig ist. In der Regelkarte wird für das erste Fahrzeug 20 die Verkehrsregel "Vorfahrt gewähren" eingetragen. Da in einem solchen Fall mangels Hinweisen auf eine abknickende Vorfahrtsregelung auch die gegenläufige Fahrtrichtung der gleichen Verkehrsregelung unterworfen ist, wird auch für das zweite Fahrzeug die Verkehrsregel "Vorfahrt gewähren" eingetragen. Ebenso ist bekannt, dass bei derartigen Kreuzungen der Querverkehr Vorfahrt hat, wenn ein bestimmtes Fahrzeug die Vorfahrt gewähren muss. Deshalb wird für das dritte Fahrzeug 24 und auch für die dazu entgegengesetzte Richtung die Verkehrsregel "Vorfahrt" eingetragen.

Die erzeugte Regelkarte, welche die eben erwähnten Verkehrsregeln in einem bestimmten, allgemein bekannten Format enthält, wird anschließend von dem ersten Fahrzeug 20 über Fahrzeug-zu-X-Kommunikationsmittel ausgesendet und von den anderen Fahrzeugen 22, 24 empfangen. Diese erstellen ebenfalls mit Hilfe jeweiliger Kameras eigene Regelkarten in gleicher Art und Weise wie eben beschrieben. Diese selbst erstellten Regelkarten werden mit der von dem ersten Fahrzeug 20 erhaltenen Regelkarte verglichen. Stimmen die Regelkarten überein, so senden die jeweiligen Fahrzeuge 22, 24 eine Bestätigung an das erste Fahrzeug 20, dass die Regelkarten übereinstimmen und somit für alle Fahrzeuge 20, 22, 24 ein gefahrloses Passieren der Kreuzung 10 unter Verwendung identischer Regelkarten möglich ist. Die in der gemeinsamen Regelkarte enthaltenen Verkehrsregeln werden den jeweiligen Fahrern der Fahrzeuge 20, 22, 24 zur Beachtung angezeigt.

Sollten die Regelkarten bei einem der anderen Fahrzeuge 22, 24 nicht übereinstimmen, beispielsweise weil eines der Fahrzeuge 20, 22, 24 ein Verkehrszeichen aufgrund Bedeckung mit Schnee nicht richtig identifiziert hat, so wird ein Abstimmungsvorgang ausgelöst. Eine entsprechende Ausführung wird nachfolgend mit Bezug auf Fig. 1 beschrieben.

Gemäß einer Ausführung wird unter den Fahrzeugen 20, 22, 24 ein Fahrzeug als Mastereinheit bestimmt, an welches alle Informationen über die Regelkarten und deren Erstellung wie eben erwähnt gesendet werden. Als Mastereinheit kann dabei dasjenige Fahrzeug bestimmt werden, welches gemäß einem internen Zähler bislang am seltensten Mastereinheit war. Das als Mastereinheit bestimmte Fahrzeug wertet dann die vorliegenden Informationen aus und erstellt eine gemeinsame Regelkarte zur Beachtung für alle Fahrzeuge. Diese gemeinsame Regelkarte wird an die anderen Fahrzeuge übermittelt, welche eine Bestätigung des Empfangs und eventuell auch der Akzeptanz aussenden. Die in der gemeinsamen Regelkarte enthaltenen Verkehrsregeln werden so gewählt, dass sie komplementär zueinander sind, also dass insbesondere ein kollisionsfreies Passieren der Kreuzung 10 für alle Fahrzeuge 20, 22, 24 möglich ist. Diese Regeln werden den jeweiligen Fahrern der Fahrzeuge 20, 22, 24 angezeigt.

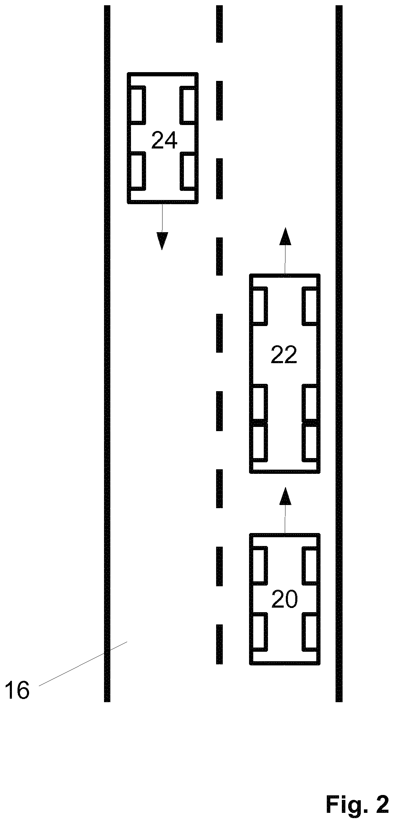

Fig. 2 zeigt eine einspurige Straße 16, auf welcher in beiden Richtungen Fahrzeuge fahren. Dabei handelt es sich um ein erstes Fahrzeug 20, welches einem zweiten Fahrzeug 22 folgt, sowie um ein entgegenkommendes drittes Fahrzeug 24. Das zweite Fahrzeug 22 ist dabei ein langsam fahrender Lastkraftwagen. Deshalb besteht für das erste Fahrzeug 20 eine Veranlassung dazu, das zweite Fahrzeug 22 zu überholen.

Das zweite Fahrzeug 22 ist als kommerzielles Fahrzeug mit besseren Sensoren, insbesondere einer besseren Kamera als die anderen Fahrzeuge 20, 24 ausgestattet. Überdies verfügt es über ein besseres Sichtfeld auf die Straße 16 als das nachfolgende erste Fahrzeug 20. Deshalb sendet das zweite Fahrzeug 22 eine Information an das erste Fahrzeug 20, in welcher es anzeigt, dass es bei der Durchführung eines Überholvorgangs behilflich sein kann.

Wenn der Fahrer des ersten Fahrzeugs 20 einen Überholvorgang durchführen möchte, betätigt er einen in dem ersten Fahrzeug 20 vorhandenen Knopf. Daraufhin wird die Überholabsicht in einer Nachricht an das zweite Fahrzeug 22 gesendet. Dieses erfasst dann mit seiner Kamera die vor ihm befindliche Umgebungssituation und erkennt dabei das entgegenkommende dritte Fahrzeug 24, welches ersichtlich einem Überholvorgang des ersten Fahrzeugs 20 entgegensteht. Das zweite Fahrzeug 22 erstellt daraufhin eine Regelkarte, welche für die Straße 16 ein temporäres Überholverbot enthält. Diese Regelkarte sendet das zweite Fahrzeug 22 an das erste Fahrzeug 20, welches diese Regelkarte erhält und aufgrund des temporären Überholverbots ermittelt, dass ein Überholvorgang derzeit nicht möglich ist. Dies wird dem Fahrer des ersten Fahrzeugs 20 angezeigt, so dass dieser dazu aufgefordert wird, den geplanten Überholvorgang zu unterlassen. Eine Kollision mit dem dritten Fahrzeug 24 wird auf diese Weise wirkungsvoll vermieden.

Es sei verstanden, dass die hier gezeigten Ausführungsbeispiele lediglich schematisch zu verstehen sind. Aus Gründen der Vereinfachung wird bei den unten stehenden Ansprüchen auf die Einfügung der Bezugszeichen verzichtet. Es wird davon ausgegangen, dass eine Zuordnung von Bezeichnungen der Ansprüche zu den Ausführungsbeispielen problemlos möglich ist.

Allgemein sei darauf hingewiesen, dass unter Fahrzeug-zu-X-Kommunikation insbesondere eine direkte Kommunikation zwischen Fahrzeugen und/oder zwischen Fahrzeugen und Infrastruktureinrichtungen verstanden wird. Beispielsweise kann es sich also um Fahrzeug-zu-Fahrzeug-Kommunikation oder um Fahrzeug-zu-Infrastruktur-Kommunikation handeln. Sofern im Rahmen dieser Anmeldung auf eine Kommunikation zwischen Fahrzeugen Bezug genommen wird, so kann diese grundsätzlich beispielsweise im Rahmen einer Fahrzeug-zu-Fahrzeug-Kommunikation erfolgen, welche typischerweise ohne Vermittlung durch ein Mobilfunknetz oder eine ähnliche externe Infrastruktur erfolgt und welche deshalb von anderen Lösungen, welche beispielsweise auf ein Mobilfunknetz aufbauen, abzugrenzen ist. Beispielsweise kann eine Fahrzeug-zu-X-Kommunikation unter Verwendung der Standards IEEE 802.11p oder IEEE1609.4 erfolgen. Eine Fahrzeug-zu-X-Kommunikation kann auch als C2X-Kommunikation bezeichnet werden. Die Teilbereiche können als C2C (Car-to-Car) oder C2I (Car-to-Infrastructure) bezeichnet werden.

Es sei des Weiteren darauf hingewiesen, dass beispielsweise auch Ausführungen des Verfahrens in zumindest einer seiner Varianten möglich sind, in welchen lediglich ein Fahrzeug die Verkehrsregeln erfasst, eine Regelkarte daraus erstellt und dann an andere Fahrzeuge zur unmittelbaren Beachtung sendet. Diese Fahrzeuge empfangen dann die Regelkarte und verwenden sie ohne weitere Überprüfung. Bevorzugt können sie den Empfang und/oder die Beachtung bestätigen. Es ist außerdem möglich, dass alle beteiligten Fahrzeuge jeweilige Regelkarten von einem zentralen Server empfangen.

Es sei verstanden, dass ein erfindungsgemäßes Verfahren beispielsweise auch von Fahrzeugen oder unter Einbeziehung von Fahrzeugen ausgeführt werden kann, welche keine Umfeldsensoren wie beispielsweise Kameras, RADAR oder LIDAR aufweisen. Beispielsweise können derartige Fahrzeuge auf eine Kreuzung oder eine andere regelungsbedürftige Stelle zufahren, auf welche auch andere Fahrzeuge zufahren, welche Umfeldsensoren haben. Fahrzeuge ohne Umfeldsensoren können dann zwar typischerweise keine Regelkarte erzeugen, können jedoch trotzdem an einem Abstimmungsvorgang oder Abstimmschritt teilnehmen und dazu beitragen, zu einer gemeinsam akzeptierten und/oder verwendeten Regelkarte zu gelangen.

Es sei darauf hingewiesen, dass ein erfindungsgemäßes Verfahren grundsätzlich für alle Arten von Fahrzeugen verwendet werden kann. Insbesondere kann es für frei lenkbare oder auch automatisch fahrende Kraftfahrzeuge wie beispielsweise Personenkraftwagen, Lastkraftwagen, Busse oder Einsatzfahrzeuge verwendet werden. Es kann jedoch auch für Schienenfahrzeuge, beispielsweise Straßenbahnen oder auch normale Züge verwendet werden. Auch eine Anwendung bei Fahrzeugen, welche mit menschlicher oder tierischer Muskelkraft betrieben werden oder bei Spezialfahrzeugen wie beispielsweise bei Fahrzeugen des innerbetrieblichen Werksverkehrs, beispielsweise Gabelstapler, ist möglich.

## Patentansprüche

1. Verfahren zum Handhaben einer Verkehrsregeln enthaltenden Regelkarte in einem Fahrzeug (20, 22, 24),
welches folgende Schritte aufweist:
- Empfangen einer Regelkarte direkt von einem anderen Fahrzeug (20, 22, 24),
- Vergleichen der empfangenen Regelkarte mit einer weiteren Regelkarte, und
- Auslösen eines Abstimmungsvorgangs, wenn die Regelkarte und die weitere Regelkarte nicht übereinstimmen;
- wobei die Regelkarte oder die weitere Regelkarte über eine Funkverbindung empfangen wird, wobei bei Durchführung des Abstimmungsvorgangs folgende Schritte ausgeführt werden:
- Bestimmen eines der am Abstimmungsvorgang beteiligten Fahrzeuge (20, 22, 24) als Mastereinheit,
- Festlegen einer Regelkarte für alle am Abstimmungsvorgang beteiligten Fahrzeuge (20, 22, 24) durch die Mastereinheit, und
- Senden der Regelkarte an alle beteiligten Fahrzeuge (20, 22, 24), wobei die Mastereinheit die folgenden Schritte ausführt:
- Empfangen von Verkehrsregeln und/oder Regelkarten von Fahrzeugen (20, 22, 24),
- Zusammentragen und/oder Fusionieren der Verkehrsregeln oder Regelkarten,
- Erkennen und/oder Auflösen von Blockadesituationen und/oder nicht eindeutigen Regelsituationen, insbesondere durch Anpassung oder Modifizierung einer Regelkarte,
- Senden einer daraus entstandenen, insbesondere fusionierten Regelkarte, an andere am Abstimmungsvorgang beteiligte Fahrzeuge (20, 22, 24),
- Senden des Fahrverhaltens des Fahrzeugs (20, 22, 24), welches Mastereinheit ist.

2. Verfahren nach Anspruch 1,
- wobei das Verfahren ansprechend darauf ausgeführt wird, dass eine Annäherung an eine Kreuzung (10) oder Einmündung erkannt wird,
- wobei die Annäherung bevorzugt mittels Umfeldsensoren, insbesondere mittels einer Kamera, mittels Satellitennavigation, mittels einer elektronischen Straßenkarte und/oder mittels Fahrzeug-zu-X-Kommunikation erkannt wird.

3. Verfahren nach Anspruch 2,
- wobei in der Regelkarte enthaltene Verkehrsregeln der Kreuzung (10) oder Einmündung zugeordnet sind, insbesondere Vorfahrt und Vorfahrt gewähren.

4. Verfahren nach einem der vorhergehenden Ansprüche,
- wobei das Verfahren ansprechend darauf ausgeführt wird, dass das Fahrzeug (20, 22, 24) an ein anderes Fahrzeug (20, 22, 24) eine Nachricht gesendet hat, welches eine Aufforderung zum Senden einer Regelkarte enthält.

5. Verfahren nach einem der vorhergehenden Ansprüche,
- welches laufend wiederholt, insbesondere periodisch wiederholt zum kontinuierlichen Abgleich, ausgeführt wird.

6. Verfahren nach einem der vorhergehenden Ansprüche,
- wobei zusammen mit der Regelkarte eines oder mehrere der folgenden Elemente empfangen werden:
- ein Kennzeichen eines die Regelkarte sendenden Fahrzeugs (20, 22, 24),
- eine Identifikation eines die Regelkarte sendenden Fahrzeugs (20, 22, 24),
- eine Kreuzungstopologie,
- Objekteigenschaften, insbesondere Art, Position und/oder Trajektorie, eines die Regelkarte sendenden Fahrzeugs (20, 22, 24),
- Informationen über eine Zuverlässigkeit der Regelkarte und/oder über eine Zuverlässigkeit von Umfeldsensoren, insbesondere einer Kamera,
- Informationen über Fahrzeuge (20, 22, 24), welche nicht mit einer Technik zum Teilnehmen am Abstimmen von Verkehrsregeln ausgestattet sind, insbesondere welche nicht mit einer Fahrzeug-zu-X-Kommunikationstechnik ausgestattet sind, und insbesondere einschließlich deren Kennzeichen,
- ein Zuverlässigkeitsmaß.

7. Verfahren nach Anspruch 1,
- wobei die weitere Regelkarte mittels folgender Schritte erzeugt wird:
- Erkennen eines Umgebungszustands mittels einer Anzahl von Umfeldsensoren,
- Ableiten einer Anzahl von Verkehrsregeln basierend auf dem Umgebungszustand, und
- Erzeugen der Regelkarte basierend zumindest auf den Verkehrsregeln.

8. Verfahren nach einem der vorhergehenden Ansprüche,
- wobei die weitere Regelkarte von einem zentralen Server empfangen wird.

9. Verfahren nach einem der vorhergehenden Ansprüche,
- wobei an dem Abstimmungsvorgang das Fahrzeug (20, 22, 24) sowie andere Fahrzeuge (20, 22, 24) beteiligt sind, welche sich einer Kreuzung (10) oder Einmündung annähern oder welche auf der gleichen Straße (12, 14) fahren;
und/oder
- wobei am Abstimmungsvorgang ausschließlich Fahrzeuge (20, 22, 24) beteiligt sind, von welchen eine Kreuzung (10) jeweiliger Trajektorien berechnet wurde.

10. Verfahren nach einem der vorhergehenden Ansprüche,
- wobei bei Durchführung des Abstimmungsvorgangs einer oder mehrere der folgenden Schritte iterativ ausgeführt werden:
- Bewerten einer Signifikanz und/oder Konfidenz von Informationen mit Schwellenwerten oder Wahrscheinlichkeiten, beispielsweise von Gefahrsituation oder Fahrmodus wie selbstfahrend oder automatisch fahrend eines jeweiligen Fahrzeugs (20, 22, 24),
- Plausibilisieren, beispielsweise technisch oder statistisch,
- Zusammentragen von Informationen, insbesondere aller verfügbarer Informationen,
- Fusionieren, insbesondere Erstellen eines neuen, beispielsweise erweiterten, insbesondere räumlich erweiterten und/oder präzisierten Bilds, das insbesondere inhaltlich stimmig ist.

11. Verfahren nach einem der vorhergehenden Ansprüche,
- wobei aus dem Abstimmungsvorgang eine Regelkarte resultiert, welche an eine Anzahl anderer Fahrzeuge (20, 22, 24) gesendet wird.

12. Verfahren nach einem der vorhergehenden Ansprüche,
- welches bei Durchführung des Abstimmungsvorgangs ferner einen Schritt des Erkennens einer Blockade aufweist.

13. Verfahren nach Anspruch 12,
- wobei im Fall einer Blockade eine Regelkarte erstellt und/oder abgestimmt wird,
- bei welchem Fahrzeuge (20, 22, 24) ohne Möglichkeit zur Teilnahme an dem Verfahren, insbesondere Fahrzeuge (20, 22, 24) ohne Fahrzeug-zu-X-Kommunikationstechnik, priorisiert durchgelassen werden, und/oder
- bei welcher, insbesondere im Fall einer Pattsituation, Prioritäten anhand einem oder mehreren der folgenden Parameter Fahrzeugen (20, 22, 24) zugewiesen werden:
- Fahrgeschwindigkeit,
- festes Regelwerk,
- Fahrtrichtung, beispielsweise Himmelsrichtung,
- Zählerstand jeweiliger Vorfahrtszähler,
- Navigationsinformationen,
- Informationen über aktivierte Komponenten wie ein Navigationssystem,
- Informationen über gesetzte Blinker,
- Informationen über automatische Lenkung,
- Informationen über Nachgeben,
- Fahrtziel,
- geplante Trajektorie,
- Sondereinsatzrechte oder Vorliegen besonderer Vorrechtsmerkmale;
oder
- wobei im Fall einer Blockade der Abstimmungsvorgang abgebrochen wird.

14. Verfahren nach einem der vorhergehenden Ansprüche,
- welches ferner einen Schritt des Sendens einer Bestätigung an die Mastereinheit und/oder an andere am Abstimmungsvorgang beteiligte Fahrzeuge (20, 22, 24) nach Empfang einer Regelkarte von der Mastereinheit aufweist.

15. Verfahren nach einem der vorhergehenden Ansprüche,
- wobei die Mastereinheit unter am Abstimmungsvorgang beteiligten Fahrzeugen (20, 22, 24) bestimmt wird, und zwar vorzugsweise unter Verwendung einer oder mehrerer der folgenden Kriterien:
- Zeitpunkte des Eintreffens an einem Ort mit zu regelnder Verkehrslage,
- Qualität von jeweiligen Sensoren,
- Zuverlässigkeit einer Fahrerfahrung,
- Anzahl von Bestimmungen als Mastereinheit in der Vergangenheit,
- Sondereinsatzrechte oder Vorliegen von besonderen Vorrechtsmerkmalen;
und/oder
- wobei eine straßenseitig angeordnete Einheit, insbesondere eine Road Side Unit (RSU) als Mastereinheit bestimmt wird.

16. Verfahren nach einem der vorhergehenden Ansprüche,
- wobei Fahrzeuge (20, 22, 24), welche nicht Mastereinheit sind, einen oder mehrere der folgenden Schritte ausführen:
- Senden von Verkehrsregeln und/oder zumindest einer Regelkarte an die Mastereinheit,
- Empfangen einer Regelkarte von der Mastereinheit,
- sowie vorzugsweise auch Senden einer Bestätigung über die Einhaltung der von der Mastereinheit empfangenen Regelkarte.

17. Verfahren nach einem der vorhergehenden Ansprüche,
- wobei bei Durchführung des Abstimmungsvorgangs eine zufällige Zuteilung von Prioritäten zu den beteiligten Fahrzeugen (20, 22, 24) erfolgt,
- wobei ein Fahrzeug (20, 22, 24) mit höherer Priorität Vorrecht vor Fahrzeugen (20, 22, 24) mit niedrigerer Priorität hat.

18. Verfahren nach einem der vorhergehenden Ansprüche,
- welches in dem Fall, dass während des Abstimmungsvorgangs ein Abbruchkriterium erfüllt wird, einen Schritt des Abbrechens des Abstimmungsvorgangs aufweist.

19. Verfahren nach einem der vorhergehenden Ansprüche,
- wobei die Regelkarte oder die weitere Regelkarte in einer Fahrzeug-zu-X-Nachricht, empfangen wird.

20. Verfahren nach einem der vorhergehenden Ansprüche,
- welches ferner einen Schritt des Sendens von Informationen, insbesondere über Regelkarten und/oder Verkehrsregeln, an nachfolgende oder andere Verkehrsteilnehmer aufweist,
- wobei dieser Schritt des Sendens laufend wiederholt oder ansprechend auf eine vergangene geregelte Situation ausgeführt wird.

21. Verfahren nach einem der vorhergehenden Ansprüche,
- wobei die Regelkarte und/oder die weitere Regelkarte
- einer Kreuzung (10),
- einem Kreisverkehr
- einer Einmündung, insbesondere auf eine Autobahn,
- einer Engstelle,
- einer Haltestelle
und/oder
- einer Straße (12, 14), insbesondere einer Straße (12, 14) mit Überholmöglichkeit,
zugeordnet ist.

## Claims

1. Method for handling a rule chart, containing traffic rules, in a vehicle (20, 22, 24),
comprising the following steps:
- receiving a rule chart directly from another vehicle (20, 22, 24),
- comparing the received rule chart with a further rule chart, and
- initiating a coordinating process if the rule chart and the further rule chart do not match;
- wherein the rule chart or the further rule chart is received via a radio connection, wherein the following steps are carried out when performing the coordinating process:
- determining one of the vehicles (20, 22, 24) involved in the coordinating process as a master unit,
- defining a rule chart for all vehicles (20, 22, 24) involved in the coordinating process by means of the master unit, and
- sending the rule chart to all vehicles (20, 22, 24) involved, wherein the master unit carries out the following steps:
- receiving traffic rules and/or rule charts from vehicles (20, 22, 24),
- collating and/or fusing the traffic rules or rule charts,
- recognizing and/or resolving blockage situations and/or ambiguous rule situations, in particular by adapting or modifying a rule chart,
- sending a resultant, in particular fused, rule chart to other vehicles (20, 22, 24) involved in the coordinating process,
- sending the driving behaviour of the vehicle (20, 22, 24) which is the master unit.

2. Method according to Claim 1,
- wherein the method is carried out in response to the detection that an intersection (10) or junction is being approached,
- wherein the approach is preferably detected by means of environment sensors, in particular by means of a camera, by means of satellite navigation, by means of an electronic road map and/or by means of vehicle-to-X communication.

3. Method according to Claim 2,
- wherein traffic rules contained in the rule chart are assigned to the intersection (10) or junction, in particular right of way and give way.

4. Method according to any of the preceding claims,
- wherein the method is carried out in response to the fact that the vehicle (20, 22, 24) has sent to another vehicle (20, 22, 24) a message containing a request to send a rule chart.

5. Method according to any of the preceding claims,
- which is carried out continually repeatedly, in particular periodically for continuous alignment.

6. Method according to any of the preceding claims,
- wherein one or more of the following elements are received together with the rule chart:
- a registration number of a vehicle (20, 22, 24) sending the rule chart,
- an identification of a vehicle (20, 22, 24) sending the rule chart,
- an intersection topology,
- object properties, in particular the type, position and/or trajectory, of a vehicle (20, 22, 24) sending the rule chart,
- information about a reliability of the rule chart and/or about a reliability of environment sensors, in particular of a camera,
- information about vehicles (20, 22, 24) which are not equipped with technology for participating in the coordination of traffic rules, in particular which are not equipped with vehicle-to-X communication technology, and in particular including their registration numbers,
- a reliability metric.

7. Method according to Claim 1,
- wherein the further rule chart is generated by means of the following steps:
- detecting a surroundings condition by means of a number of environment sensors,
- deriving a number of traffic rules on the basis of the surroundings condition, and
- generating the rule chart on the basis of at least the traffic rules.

8. Method according to any of the preceding claims,
- wherein the further rule chart is received from a central server.

9. Method according to any of the preceding claims,
- wherein the vehicle (20, 22, 24) and other vehicles (20, 22, 24) approaching an intersection (10) or junction or driving on the same road (12, 14) are involved in the coordinating process;
and/or
- wherein exclusively vehicles (20, 22, 24) from which an intersection (10) of respective trajectories has been calculated are involved in the coordinating process.

10. Method according to any of the preceding claims,
- wherein one or more of the following steps are carried out iteratively when performing the coordinating process:
- assessing a significance and/or confidence of information with threshold values or probabilities, for example hazardous situation or driving mode, such as self-driving or automatic driving, of a respective vehicle (20, 22, 24),
- carrying out a plausibility check, for example on a technical or statistical basis,
- collating information, in particular all available information,
- fusing, in particular creating a new, for example extended, in particular spatially extended and/or more precise image, which is in particular consistent in terms of content.

11. Method according to any of the preceding claims,
- wherein the coordinating process results in a rule chart which is sent to a number of other vehicles (20, 22, 24).

12. Method according to any of the preceding claims,
- which furthermore comprises a step of detecting a blockage when performing the coordinating process.

13. Method according to Claim 12,
- wherein in the event of a blockage, a rule chart is created and/or coordinated,
- in which vehicles (20, 22, 24) without the possibility of participating in the method, in particular vehicles (20, 22, 24) without vehicle-to-X communication technology, are allowed to pass with prioritization, and/or
- in which, in particular in the event of a deadlock situation, priorities are allocated to vehicles (20, 22, 24) on the basis of one or more of the following parameters:
- driving speed,
- fixed set of rules,
- direction of travel, for example cardinal direction,
- counter reading of respective right-of-way counters,
- navigation information,
- information about activated components such as a navigation system,
- information about indicators set,
- information about automatic steering,
- information about giving way,
- destination,
- planned trajectory,
- special use rights or existence of particular prerogative features;
or
- wherein in the event of a blockage, the coordinating process is terminated.

14. Method according to any of the preceding claims,
- which furthermore comprises a step of sending a confirmation to the master unit and/or to other vehicles (20, 22, 24) involved in the coordinating process after reception of a rule chart from the master unit.

15. Method according to any of the preceding claims,
- wherein the master unit is determined among vehicles (20, 22, 24) involved in the coordinating process, specifically preferably using one or more of the following criteria:
- times of arrival at a location with a traffic situation to be regulated,
- quality of respective sensors,
- reliability of driving experience,
- number of master unit determinations in the past,
- special use rights or existence of particular prerogative features;
and/or
- wherein a unit arranged on the road side, in particular a road side unit (RSU), is determined as the master unit.

16. Method according to any of the preceding claims,
- wherein vehicles (20, 22, 24) which are not the master unit carry out one or more of the following steps:
- sending traffic rules and/or at least one rule chart to the master unit,
- receiving a rule chart from the master unit,
- and preferably also sending a confirmation of compliance with the rule chart received from the master unit.

17. Method according to any of the preceding claims,
- wherein priorities are allocated randomly to the vehicles (20, 22, 24) involved when performing the coordinating process,
- wherein a higher-priority vehicle (20, 22, 24) has priority over lower-priority vehicles (20, 22, 24).

18. Method according to any of the preceding claims,
- which, in the event that a termination criterion is satisfied during the coordinating process, comprises a step of terminating the coordinating process.

19. Method according to any of the preceding claims,
- wherein the rule chart or the further rule chart is received in a vehicle-to-X message.

20. Method according to any of the preceding claims,
- which furthermore comprises a step of sending information, in particular about rule charts and/or traffic rules, to following or other road users,
- wherein this sending step is carried out continually repeatedly or in response to a past regulated situation.

21. Method according to any of the preceding claims,
- wherein the rule chart and/or the further rule chart are/is assigned to
- an intersection (10),
- a roundabout,
- a junction, in particular on a motorway,
- a bottleneck,
- a stopping place
and/or
- a road (12, 14), in particular a road (12, 14) where overtaking is possible.

## Revendications

1. Procédé permettant de gérer une carte de règles contenant des règles de circulation dans un véhicule (20, 22, 24),
présentant les étapes suivantes consistant à :
- recevoir une carte de règles directement d'un autre véhicule (20, 22, 24),
- comparer la carte de règles reçue avec une carte de règles supplémentaire ; et
- déclencher une opération de coordination si la carte de règles et la carte de règles supplémentaire ne coïncident pas ;
- dans lequel la carte de règles ou la carte de règles supplémentaire est reçue par une liaison radio, les étapes suivantes étant exécutées lors de l'exécution de l'opération de coordination, consistant à :
- déterminer comme unité maître l'un des véhicules (20, 22, 24) participant à l'opération de coordination,
- définir par l'unité maître une carte de règles pour tous les véhicules (20, 22, 24) participant à l'opération de coordination, et
- envoyer la carte de règles à tous les véhicules (20, 22, 24) participants, l'unité maître exécutant les étapes suivantes consistant à :
- recevoir des règles de circulation et/ou des cartes de règles de la part des véhicules (20, 22, 24),
- rassembler et/ou fusionner les règles de circulation ou les cartes de règles,
- identifier et/ou résoudre des situations de blocage et/ou des situations de régulation non univoques, en particulier par l'adaptation ou la modification d'une carte de règles,
- envoyer une carte de règles ainsi créée, en particulier fusionnée, à d'autres véhicules (20, 22, 24) participant à l'opération de coordination,
- envoyer le comportement de conduite du véhicule (20, 22, 24) qui est l'unité maître.

2. Procédé selon la revendication 1,
- dans lequel le procédé est exécuté suite au fait qu'une approche d'une intersection (10) ou d'une jonction est identifiée,
- dans lequel l'approche est identifiée de préférence au moyen de capteurs d'environnement, en particulier au moyen d'une caméra, au moyen d'une navigation par satellite, au moyen d'une carte routière électronique et/ou au moyen d'une communication de véhicule à X.

3. Procédé selon la revendication 2,
- dans lequel les règles de circulation contenues dans la carte de règles sont associées à l'intersection (10) ou à la jonction, en particulier la priorité et le cédez le passage.

4. Procédé selon l'une quelconque des revendications précédentes,
- dans lequel le procédé est exécuté suite au fait que le véhicule (20, 22, 24) a envoyé à un autre véhicule (20, 22, 24) un message qui contient une invitation à envoyer une carte de règles.

5. Procédé selon l'une quelconque des revendications précédentes,
- qui est exécuté en continu à plusieurs reprises, en particulier périodiquement à plusieurs reprises, pour un rapprochement continu.

6. Procédé selon l'une quelconque des revendications précédentes,
- dans lequel conjointement avec la carte de règles, un ou plusieurs des éléments suivants sont reçus :
- une immatriculation d'un véhicule (20, 22, 24) envoyant la carte de règles,
- une identification d'un véhicule (20, 22, 24) envoyant la carte de règles,
- une topologie d'intersection,
- des propriétés d'objet, en particulier le type, la position et/ou la trajectoire d'un véhicule (20, 22, 24) envoyant la carte de règles,
- des informations concernant une fiabilité de la carte de règles et/ou une fiabilité des capteurs d'environnement, en particulier d'une caméra,
- des informations concernant des véhicules (20, 22, 24) qui ne sont pas équipés d'une technique permettant de participer à la coordination de règles de circulation, en particulier ceux qui ne sont pas équipés d'une technique de communication de véhicule à X, et en particulier y compris leurs immatriculations,
- une mesure de fiabilité.

7. Procédé selon la revendication 1,
- dans lequel la carte de règles supplémentaire est générée au moyen des étapes suivantes consistant à :
- identifier un état d'environnement au moyen d'un nombre de capteurs d'environnement,
- dériver un nombre de règles de circulation sur la base de l'état d'environnement, et
- générer la carte de règles sur la base au moins des règles de circulation.

8. Procédé selon l'une quelconque des revendications précédentes,
- dans lequel la carte de règles supplémentaire est reçue à partir d'un serveur central.

9. Procédé selon l'une quelconque des revendications précédentes,
- dans lequel le véhicule (20, 22, 24) ainsi que d'autres véhicules (20, 22, 24) qui s'approchent d'une intersection (10) ou d'une jonction ou roulent sur la même route (12, 14) participent à l'opération de coordination ;
et/ou
- dans lequel seuls participent à l'opération de coordination des véhicules (20, 22, 24) dont une intersection (10) des trajectoires respectives a été calculée.

10. Procédé selon l'une quelconque des revendications précédentes,
- dans lequel lors de l'exécution de l'opération de coordination, une ou plusieurs des étapes suivantes sont exécutées par itération, consistant à :
- évaluer une signifiance et/ou confiance des informations avec des valeurs seuils ou des probabilités, par exemple une situation dangereuse ou un mode de conduite, tel que la conduite autonome ou la conduite automatique, d'un véhicule respectif (20, 22, 24),
- contrôler la plausibilité, par exemple de manière technique ou statistique,
- rassembler des informations, en particulier toutes les informations disponibles,
- fusionner, en particulier créer une nouvelle image, par exemple augmentée, en particulier augmentée de manière spatiale, et/ou précisée, qui est cohérente en particulier au niveau du contenu.

11. Procédé selon l'une quelconque des revendications précédentes,
- dans lequel le résultat de l'opération de coordination est une carte de règles qui est envoyée à un nombre d'autres véhicules (20, 22, 24).

12. Procédé selon l'une quelconque des revendications précédentes,
- qui présente lors de l'exécution de l'opération de coordination en outre une étape d'identification d'un blocage.

13. Procédé selon la revendication 12,
- dans lequel en cas de blocage, une carte de règles est créée et/ou une coordination a lieu,
- dans lequel des véhicules (20, 22, 24) sans possibilité de participer au procédé, en particulier des véhicules (20, 22, 24) sans technique de communication véhicule à X, sont autorisés à passer en priorité, et/ou
- dans lequel, en particulier en cas d'impasse, les priorités sont attribuées aux véhicules (20, 22, 24) à l'aide d'un ou de plusieurs des paramètres suivants :
- une vitesse de déplacement,
- un jeu de règles fixe,
- un sens de la marche, par exemple un point cardinal,
- une position de compteur de compteurs de priorité respectifs,
- des informations de navigation,
- des informations concernant des composants activés, tels qu'un système de navigation,
- des informations sur des clignotants activés,
- des informations sur une direction automatique,
- des informations sur le fait de céder,
- une destination,
- une trajectoire planifiée,
- des droits d'opération spéciale ou une présence de particularités de priorité spécifiques ;
ou
- dans lequel l'opération de coordination est abandonnée en cas de blocage.

14. Procédé selon l'une quelconque des revendications précédentes,
- qui présente en outre une étape consistant à envoyer une confirmation à l'unité maître et/ou à d'autres véhicules (20, 22, 24) participant à l'opération de coordination après réception d'une carte de règles de l'unité maître.

15. Procédé selon l'une quelconque des revendications précédentes,
- dans lequel l'unité maître est déterminée parmi des véhicules (20, 22, 24) participant à l'opération de coordination, notamment de préférence en utilisant un ou plusieurs des critères suivants :
- des instants de l'arrivée à un endroit présentant une situation de circulation à régler,
- la qualité de capteurs respectifs,
- la fiabilité d'une expérience de conduite,
- le nombre de déterminations comme unité maître dans le passé,
- des droits d'opération spéciale ou une présence de particularités de priorité spécifiques ;
et/ou
- dans lequel une unité disposée côté route, en particulier une unité en bord de route (RSU), est déterminée comme unité maître.

16. Procédé selon l'une quelconque des revendications précédentes,
- dans lequel des véhicules (20, 22, 24) qui ne sont pas des unités maître exécutent une ou plusieurs des étapes suivantes consistant à :
- envoyer des règles de circulation et/ou au moins une carte de règles à l'unité maître,
- recevoir une carte de règles de l'unité maître,
- ainsi que de préférence aussi envoyer une confirmation quant au respect de la carte de règles reçue de l'unité maître.

17. Procédé selon l'une quelconque des revendications précédentes,
- dans lequel lors de l'exécution de l'opération de coordination, une attribution aléatoire de priorités aux véhicules (20, 22, 24) participants est effectuée,
- dans lequel un véhicule (20, 22, 24) d'une priorité supérieure est prioritaire par rapport à des véhicules (20, 22, 24) de priorité inférieure.

18. Procédé selon l'une quelconque des revendications précédentes,
- qui, dans le cas où un critère d'abandon est satisfait pendant l'opération de coordination, présente une étape d'abandon de l'opération de coordination.

19. Procédé selon l'une quelconque des revendications précédentes,
- dans lequel la carte de règles ou la carte de règles supplémentaire est reçue dans un message de véhicule à X.

20. Procédé selon l'une quelconque des revendications précédentes,
- qui présente en outre une étape d'envoi d'informations, en particulier concernant des cartes de règles et/ou des règles de circulation, à des usagers de la route suivants ou autres,
- dans lequel cette étape d'envoi est répétée en continu ou en réaction à une situation régulée passée.

21. Procédé selon l'une quelconque des revendications précédentes,
- dans lequel la carte de règles et/ou la carte de règles supplémentaire sont associées
- à une intersection (10),
- à un rond-point,
- à une jonction, en particulier avec une autoroute,
- à un rétrécissement,
- à un arrêt
et/ou
- à une route (12, 14), en particulier à une route (12, 14) avec possibilité de dépassement
